# EUROPÄISCHE PATENTSCHRIFT

(11) **EP 1 707 414 B1**
(45) Veröffentlichungstag und Bekanntmachung des Hinweises auf die Patenterteilung: **12.02.2014**
(21) Anmeldenummer: 06004096.1
(22) Anmeldetag: 01.03.2006
(51) Int. Cl.: B60J 7/12, B60J 7/185

(54) **Cabriolet-Fahrzeug mit einem am Windschutzscheibenrahmen sicherbaren Dach**
Convertible vehicle with a device for locking a detachable roof to the windshield frame
Véhicule convertible avec un dispositif de verrouillage d'un toit-ouvrant au cadre de pare-brise

(30) Priorität: 02.04.2005 DE 102005015165
(43) Veröffentlichungstag der Anmeldung: 04.10.2006
(73) Patentinhaber: Valmet Automotive Oy, 23500 Uusikaupunki (FI)
(72) Erfinder: Selle, Heinrich, 32549 Bad Oeynhausen (DE); Flaspöhler, Dirk, 49124 Georgsmarienhütte (DE); Heidtmann, Hermann, 49740 Haselünne (DE); Habacker, Norbert, 49565 Bramsche (DE)
(74) Vertreter: Kronthaler, Schmidt & Coll.

(56) Entgegenhaltungen:
- FR-A- 2 568 302
- GB-A- 402 182
- GB-A- 413 116
- US-A- 5 046 767

## Beschreibung

Die Erfindung betrifft ein Cabriolet-Fahrzeug mit einem über Eingriffsglieder mittelbar oder unmittelbar an einem Windschutzscheibenrahmen sicherbaren Dach nach dem Oberbegriff des Anspruchs 1 sowie eine Verschlußvorrichtung hierfür.

Es sind zahlreiche Cabriolet-Fahrzeuge bekannt, bei denen das bewegbare Dach in seiner geschlossenen Stellung über zwei seitlich außen liegende Eingriffsglieder, etwa Drehfallen, Fanghaken oder ähnliches, an dem Windschutzscheibenrahmen des Fahrzeugs sicherbar ist.

Diese Eingriffsglieder sind über im wesentlichen quer zum Fahrzeug erstreckte und damit dem Verlauf der am Windschutzscheibenrahmen anliegenden Dachspitze folgende Kraftvermittler, etwa Ketten oder insbesondere Zug- und/oder Schubstangen, mit einem zentralen manuellen oder motorischen, etwa hydraulischen oder elektrischen, Antrieb verbunden.

Die gattungsgemäße EP 0972 665 B1 zeigt eine typische Anordnung mit einem zentralen Antrieb, der eine vertikale Drehachse umfaßt und auf ein um diese Achse drehbares Antriebsrad einwirkt, an dem zwei Zug-Schub-Stangen einander gegenüberliegend gehalten sind. Deren Enden sind abgekröpft, um in geschlossener Dachstellung eine sichernde Über-Totpunkt-Lage zu ermöglichen und dennoch zu gewährleisten, daß bei geschlossenem Dach die Zug-Schub-Stangen der beiden Seiten nicht miteinander kollidieren. Bei Drehung des Antriebsrades wandern die Abkröpfungen auf dem Antriebsrad mit einer Komponente in bzw. entgegen der Fahrtrichtung quer nach außen oder innen und betätigen dabei weiter außen liegende Eingriffsglieder, zum Beispiel Haken, im Öffnungs- oder Schließsinn.

In der sichernden Über-Totpunkt-Lage liegen die abgekröpften Enden bezüglich der Fahrzeuglängsrichtung unsymmetrisch zueinander, wodurch es erschwert wird, eine Verschlußvorrichtung dieser Art etwa bei Einbau in ein ähnliches Fahrzeug in Fahrzeuglängsrichtung (häufig auch als x-Richtung bezeichnet) um einige Zentimeter verlagert zu montieren, was durch die baulichen Gegebenheiten erforderlich sein kann. Die Unsymmetrie kann bei dieser Verlagerung zunehmen, so daß eine Abänderung der Verschlußvorrichtung erforderlich wird und eine Anpassung an verschiedene Fahrzeuge erschwert ist. Daher liegt nur eine geringe Flexibilität einer solchen Verschlußvorrichtung vor.

Die gleiche Problematik zeigt sich auch in der GB-A-413,116, in der die Verriegelbarkeit eines verschieblichen Dachteils an seitlichen Rahmenteilen des Daches problematisiert ist. Auch hier werden die inneren Enden der Kraftvermittler beim Öffnen oder Schließen des Daches um eine vertikale Achse sowohl in Fahrzeugquer- als auch in Fahrzeuglängsrichtung verlagert. Die Rotationsbewegung eines Handgriffs wird dabei über Mitnehmer auf einwärts weisende Enden der Kraftvermittler übertragen. Diese Enden müssen daher zwangsweise die Rotationsbewegung nachzeichnen und daher die überlagerte Bewegung ausführen. Zusätzlich in Ausnehmungen der Kraftvermittler eingreifende "supporting pins" können daher die Bewegung in Fahrzeuglängsrichtung nicht hemmen, sondern müssen so viel Spiel in der Eingriffsöffnung belassen, dass auch die Bewegung in Fahrzeuglängsrichtung möglich bleibt.

Der Erfindung liegt das Problem zugrunde, eine bessere Anpaßbarkeit der Dachverschlußvorrichtung an verschiedene Fahrzeuge zu erreichen und einen Toleranzausgleich bei einer Betätigung der Dachverschlußvorrichtung bereitzustellen.

Die Erfindung löst dieses Problem durch ein Cabriolet-Fahrzeug mit den Merkmalen des Anspruchs 1 und durch eine Verschlußvorrichtung mit den Merkmalen des Anspruchs 8. Hinsichtlich vorteilhafter weiterer Ausgestaltungen der Erfindung wird auf die weiteren Ansprüche 2 bis 7 verwiesen.

Erfindungsgemäß ist eine Symmetrie der beiden ausgreifenden Kraftvermittler auch bei einem Versetzen der Verschlußvorrichtung weiter nach vorne oder hinten erreicht. Die der vertikalen Längsmittelebene und damit dem Betätigungsorgan zugewandten Enden der Kraftvermittler laufen selber nicht über den Umfang eines zentralen Antriebsrades und müssen daher nicht mit einer Komponente in Fahrzeuglängsrichtung verlagert werden. Beide Kraftvermittler können unabhängig von einem Versetzen der Verschlußvorrichtung weiter nach vorne oder hinten stets den zueinander gleichen Zug- oder Schubweg ausführen, so daß eine einfache Längenänderung der Kraftvermittler -durch Austausch und/oder durch Verstellbarkeit - ausreicht, um eine Anpassung an einen anderen Fahrzeugtyp mit anderen räumlichen Verhältnissen erreichen zu können.

Anstelle der bisher abgekröpften Kraftvermittler werden vorteilhaft lediglich zwei kurze in der Ebene des vorderen Dachendes liegende Hebel verwendet, die dann nicht weiter nach außen bis zu den Verschlüssen laufen, sondern auf in Kulissen geführte Halterungen für die Kraftvermittler einwirken, so daß von dort aus die Symmetrie der Querbewegung der Kraftvermittler erreicht wird.

Für einen Toleranzausgleich ist es besonders günstig, dass die einwärts gewandten Enden der Kraftvermittler gegenüber den Kulissensteinen beweglich sind. Auch ist es alternativ möglich, daß die an den Kulissensteinen geführten Enden der Kraftvermittler dort starr gehalten sind und die Kraftvermittler in sich eine Beweglichkeit, zum Beispiel über ein Kugelgelenk, aufweisen.

Wenn trotz der reinen Translation der Kraftvermittler in Querrichtung dennoch ein zentraler Rotationskörper mit einer Hochkantdrehachse vorgesehen ist, kann die Antriebsgeometrie inklusive des Rotationskörpers einer üblichen Lösung unverändert übernommen werden, ohne daß hieran eine aufwendige Umkonstruktion erforderlich wäre. Auch ein manueller Antrieb bleibt dabei möglich.

Anstelle der bisher abgekröpften Kraftvermittler werden vorteilhaft lediglich zwei kurze in der Ebene des vorderen Dachendes liegende Hebel verwendet, die dann nicht weiter nach außen bis zu den Verschlüssen laufen, sondern auf in Kulissen geführte Halterungen für die Kraftvermittler einwirken, so daß von dort aus die Symmetrie der Querbewegung der Kraftvermittler erreicht wird.

Es ist schon für einen Toleranzausgleich besonders günstig, wenn die einwärts gewandten Enden der Kraftvermittler gegenüber den Kulissensteinen beweglich sind. Auch ist es alternativ möglich, daß die an den Kulissensteinen geführten Enden der Kraftvermittler dort starr gehalten sind und die Kraftvermittler in sich eine Beweglichkeit, zum Beispiel über ein Kugelgelenk, aufweisen.

Die Beweglichkeit der Kraftvermittler gegenüber den Kulissensteinen kann sowohl in der Ebene der Dachspitze ermöglicht sein, um damit einen Toleranzausgleich bezüglich eines Längsversatzes der Verschlußvorrichtung leisten zu können, als auch eine Komponente in Richtung der Fahrzeughochachse enthalten, um somit auch eine Höhentoleranz der Verschlußvorrichtung ausgleichen zu können.

Eine besonders stabile und daher auch zur Übertragung großer Kräfte zuverlässig geeignete Ausbildung sieht vor, daß an jeder Fahrzeugseite zwei parallele Kulissen als Führungen für die Kraftvermittler vorgesehen sind, die zum Beispiel an einem beide Kulissensteine miteinander verbindenden Träger gehalten sein können. Diese Ausbildung hat zudem den Vorteil, daß dann ein Antriebsmotor sehr platzsparend oberhalb und zwischen zwei Kulissen gelegen sein kann.

Besonders günstig ist es, wenn der Verschluß insgesamt modular ausgebildet ist und einen Grundträger umfaßt, an der wahlweise ein elektrisches oder hydraulisches Antriebsorgan oder ein manuell zu betätigender Hebel montierbar ist.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine Ansicht von unten in das erfindungsgemäße Fahrzeug auf das vordere Dachende (Dachspitze) mit angedeutetem Dachbezug und mit einem nur schematisch und transparent angedeuteten Windschutzscheibenrahmen mit einem zentralen Betätigungsorgan und seitlich außen liegenden Eingriffsgliedern zur Verriegelung (hier nicht dargestellt) am Windschutzscheibenrahmen, die über Zug-Schub-Stangen mit dem Betätigungsorgan in Wirkverbindung stehen,
- Fig. 2: eine perspektivische Ansicht der Verschlußvorrichtung von schräg unten in gegenüber ihrer Einbaulage gewendeter Stellung,
- Fig. 3: eine Ansicht von oben auf die Grundplatte der Verschlußvorrichtung mit in den Kulissen verlagerbaren Zapfen,
- Fig. 4: eine abgebrochene Schnittansicht etwa in der Ebene IV-IV in Fig. 2,
- Fig. 5: eine alternative Verschlußvorrichtung in Ansicht von oben ohne eingezeichnete seitliche Eingriffsorgane,
- Fig. 6: die Verschlußvorrichtung nach Fig. 5 in einer in etwa Fig. 2 entsprechenden Stellung,
- Fig. 7: die Verschlußvorrichtung nach Fig. 5 in Ansicht von vorne,
- Fig. 8: eine Schnittansicht etwa entsprechend der Linie VIII-VIII in Fig. 6,
- Fig. 9: eine schematische Ansicht einer herkömmlichen Verschlußvorrichtung gemäß dem Stand der Technik bei Längsversatz der die Kraftvermittler bewegenden Teile.

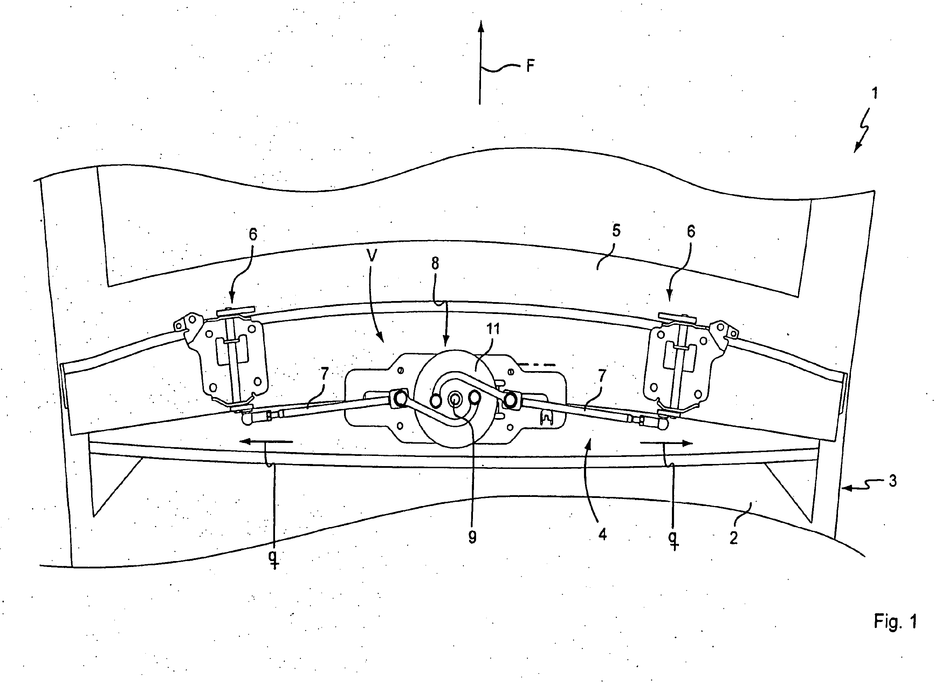

Das erfindungsgemäße Cabriolet-Fahrzeug 1 ist in der Darstellung nach Fig. 1 als sog. Soft-Top-Fahrzeug ausgebildet, umfaßt also einen flexiblen Dachbezug 2. Auch eine Ausbildung mit einem oder mehreren festen Dachteil(en) ist gleichwertig möglich.

Ebenso kann das Fahrzeug 1 sowohl ein Zweisitzer sein als auch einen größeren Innenraum mit zwei oder mehr Sitzreihen hintereinander aufweisen.

Es umfaßt in jedem Fall ein zumindest teilweise bewegliches Dach 3, das teilweise oder vollständig zu seiner Öffnung im rückwärtigen Fahrzeugbereich ablegbar ist. Das in Fahrtrichtung F vordere Ende 4 des Daches 3, das häufig auch als Dachspitze bezeichnet wird, ist mit dem Windschutzscheibenrahmen 5 des Fahrzeugs 1 mittelbar oder unmittelbar zur Sicherung der geschlossenen Dachstellung über eine Verschlußvorrichtung V verriegelbar. Die Verriegelung ist zur Dach-(teil-)öffnung lösbar.

Als Verriegelung dienen beispielhaft in den gezeichneten Ausführungsbeispielen zwei in Fahrzeugquerrichtung q seitlich mehr oder weniger weit außen liegende Eingriffsorgane 6, die hier hakenartig ausgebildet und um horizontale Achsen schwenkbar sind. Sie können jedoch in unterschiedlichsten Weisen ausgebildet sein und zum Ver- oder Entriegeln auch translatorische oder überlagerte Rotations- und Translationsbewegungen ausführen oder um vertikale Achsen schwenken. Auch ist ihre Anzahl variabel. So kann beispielsweise auch noch ein zentrales Eingriffsorgan zusätzlich vorgesehen sein.

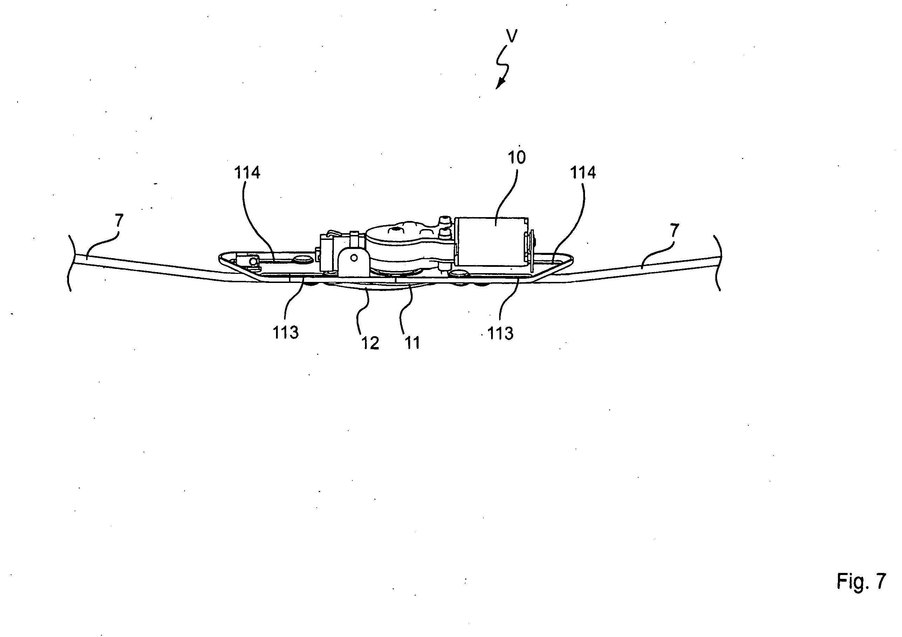

Die Eingrifforgane 6 sind über von einem hier zentralen Betätigungsorgan 8 bewegbare, jeweils mit einer zumindest wesentlichen Erstreckung in Fahrzeugquerrichtung q ausgreifende Kraftvermittler 7 beweglich. Diese sind hier als Zug-Schub-Stangen ausgebildet. Das Betätigungsorgan 8, das auch bezüglich der Fahrzeugquererstreckung außermittig liegen kann, kann durch einen manuellen, etwa um eine vertikale Achse 9 schwenkbaren Griff oder durch ein hydraulisches oder elektrisches Antriebsorgan gebildet sein. Wie in Fig. 7 sichtbar ist, kann zum Beispiel ein Elektromotor 10 platzsparend horizontal und quer zum Fahrzeug 1 gelegen sein und über ein Getriebe eine Drehung des als Antriebsscheibe ausgebildeten Rotationskörpers 11 um die Achse 9 bewirken.

Unabhängig von der Wahl des eigentlichen Antriebsorgans 8, wird in jedem Fall zum Ver- oder Entriegeln des Daches 3 diese Antriebsscheibe 11 um die Achse 9 gedreht. An dieser Antriebsscheibe 11 sind zwei parallel zur Erstreckung des vorderen Dachendes 4 liegende und jeweils einem Kurvenverlauf folgende Hebel 12 gehalten, die die Drehbewegung der Antriebsscheibe 11 über weiter außen gelegene Kulissenführungen 13, 113, 114 in Translationsbewegungen der Kraftvermittler 7, die hier als Zug-Schub-Stangen ausgebildet sind, übersetzen. Die Kulissen 13, 113, 114 können aus einer Grundplatte 15, 115 ausgenommen sein und müssen nicht exakt um 90° abgewinkelt zur Fahrtrichtung stehen. Je nach Anforderungen ist auch eine Schrägstellung und auch ein leicht gekrümmter Verlauf möglich.

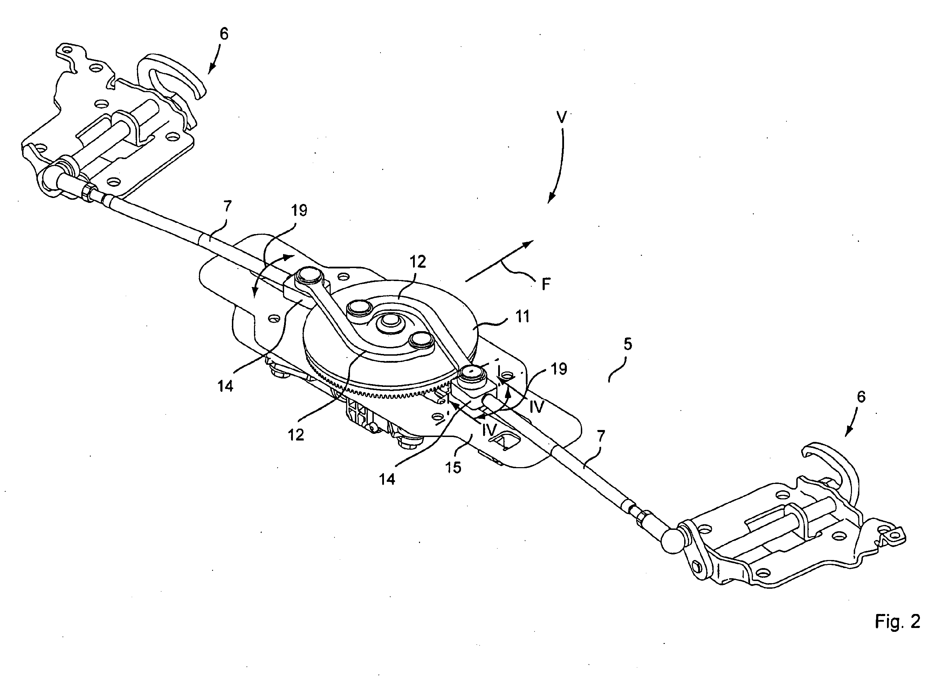

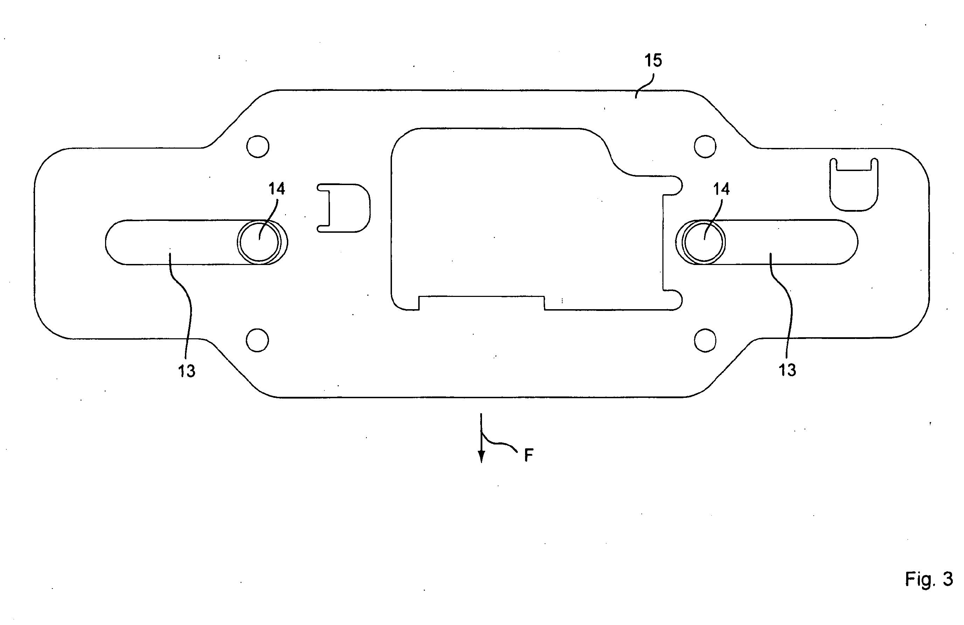

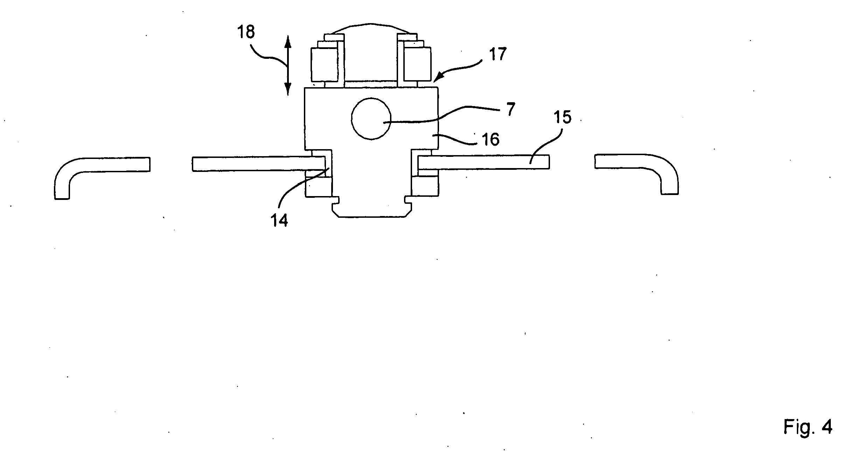

Im ersten Ausführungsbeispiel (Fig. 1 bis Fig. 4) ist für die Translationsbewegung zu jeder Fahrzeugseite hin eine Kulisse 13 vorgesehen, in der ein Kulissenstein 14 translationsbeweglich gehalten ist. Der Kulissenstein 14 umfaßt hierfür einen quer zur Kulisse 13 spielfrei gehaltenen rundzylindrischen Zapfen (Fig. 3). An diesem ist jeweils ein Kraftvermittler 7 mit seinem der vertikalen Fahrzeuglängsmittelebene E zugewandten Ende 7a über ein gegenüber dem zapfen 14 mit Übermaß ausgeführtes und daher bewegliches Lagerauge 16 gehalten. Wie in Fig. 4 sichtbar ist, hat das Ende 7a wegen des Spalts 17 Spiel in einer vertikalen Ebene in Richtung des Pfeils 18. Zudem liegt auch eine Beweglichkeit in der Ebene der Dachspitze 4 in Richtung des Pfeils 19 vor. Durch die Beweglichkeit der Enden 7a gegenüber den Kulissensteinen kann die Grundplatte 15 auch leicht in Fahrzeuglängs- oder Querrichtung oder entlang einer Hochachse versetzt werden, ohne daß dadurch größere Änderungen an der Verschlußvorrichtung erfolgen müßten. Gegebenenfalls genügt es, die Länge der Zug-Schub-Stangen 7 durch Austausch oder bei Mehrteiligkeit über eine Längenverstellung anzupassen.

Innerhalb der Kraftvermittler 7 können zudem Gelenke liegen, so daß die Kraftvermittler 7 im weiteren Verlauf zu den Querseiten q auch leicht abgewinkelt gegen die Fahrzeugquerrichtung verlaufen können. Sofern keine derartigen Gelenke vorhanden sind, werden die gesamten Kraftvermittler in gleicher Weise wie die inneren Enden 7a rein geradlinig aus- oder einwärts bewegt.

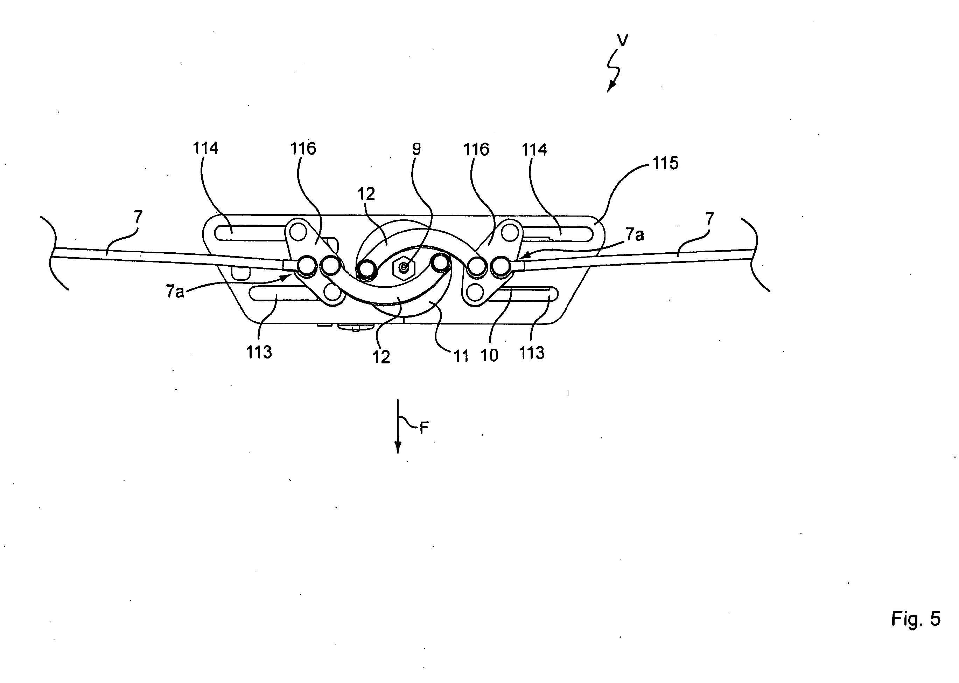

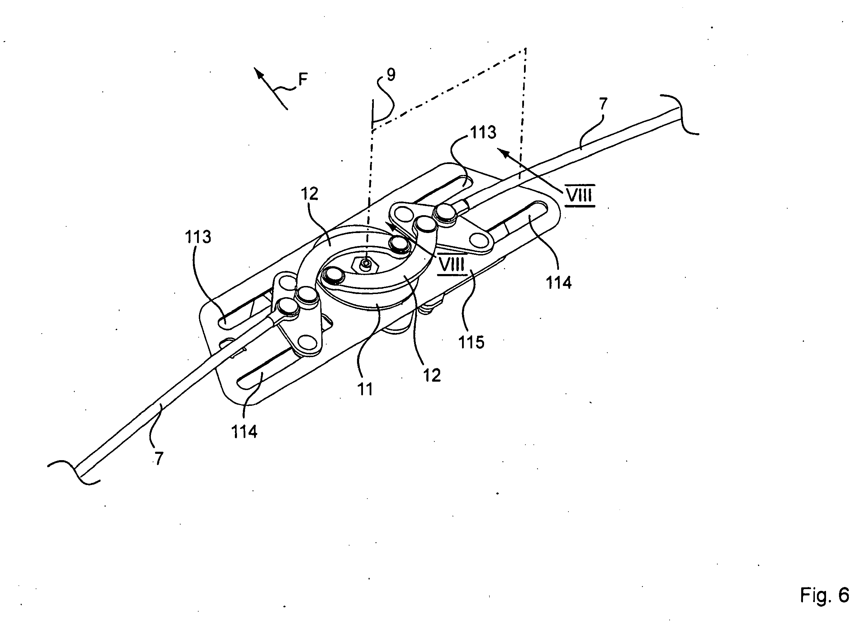

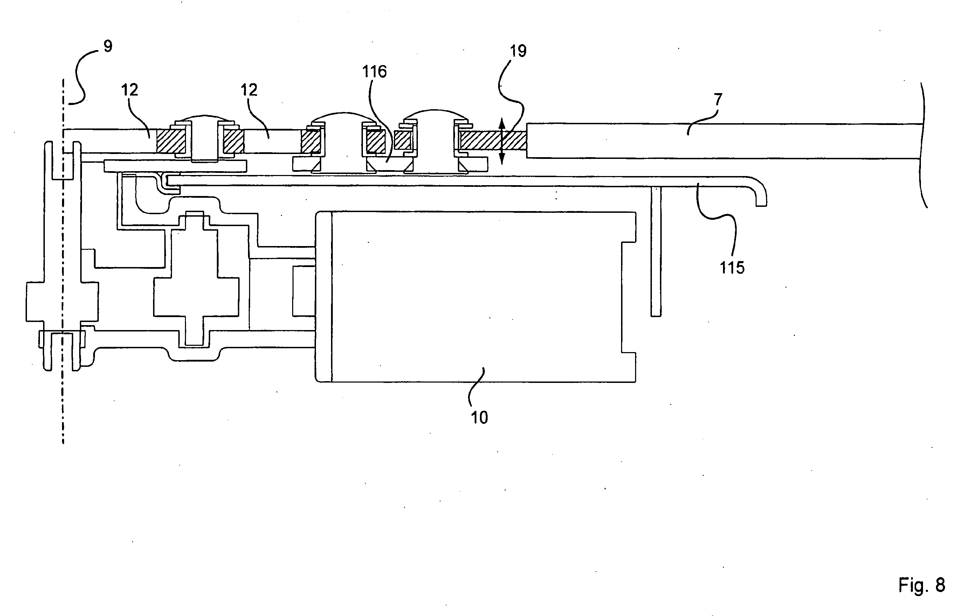

Im zweiten Ausführungsbeispiel nach den Figuren 5 bis 8 sind die Verhältnisse prinzipiell ähnlich, nur sind hier für jede Fahrzeugseite zwei zueinander parallele Führungskulissen 113, 114 in der Grundplatte 115 vorgesehen, deren Kulissensteine 14 über einen beide Kulissen übergreifenden Träger 116 verbunden sind. An dem Träger 116 ist das Ende 7a des Kraftvermittlers 7 wiederum in mehreren Ebenen (Pfeile 18, 19) beweglich gehalten.

Figur 7 verdeutlicht, daß ein Antriebsmotor 10 sehr flach zwischen zwei Kulissen 113, 114 gelegen sein kann und dadurch die erforderliche Bauhöhe für die Gesamtvorrichtung V minimiert ist.

In beiden Ausführungsbeispielen ist die Grundplatte 15, 115 der Verschlußvorrichtung V so ausgebildet, daß wahlweise die eine oder andere Antriebsart montiert werden kann, so daß das Modul sowohl bei Fahrzeugen mit elektrischer als auch mit hydraulischer Verschlußbetätigung ohne weitere Änderungen eingesetzt werden kann. Auch kann eine Montagemöglichkeit für einen manuellen Betätigungshebel vorgesehen sein, so daß das Modul auch für eine preiswerte manuelle Betätigung nutzbar ist.

Die Verschlußvorrichtung V kann in jedem Fall vor ihrem Einbau vormontiert und getestet und als fertig eingestellte Einheit an die Dachspitze 4 anmontiert werden.

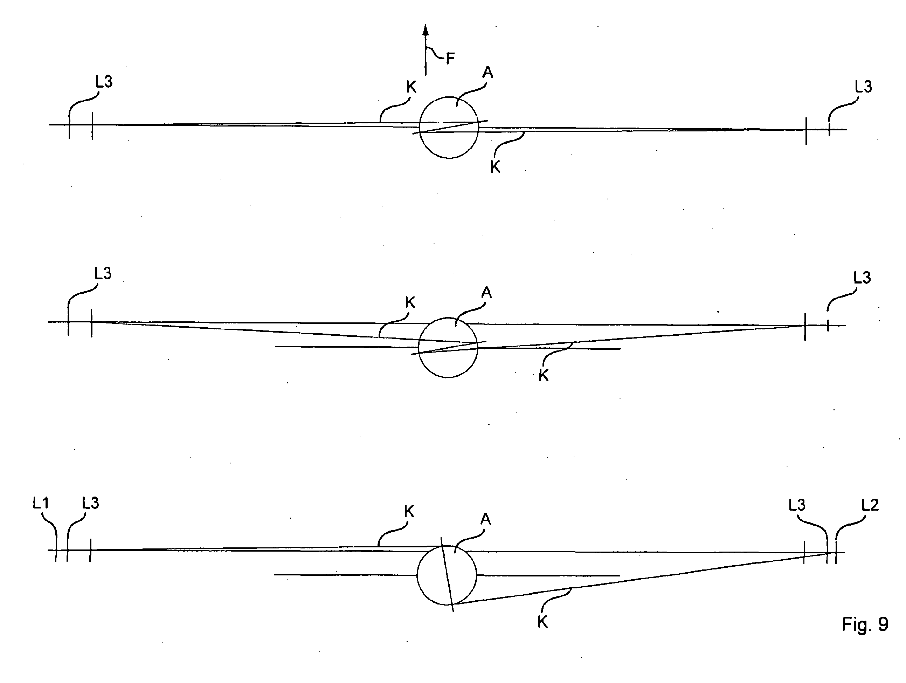

Zur Verdeutlichung der Empfindlichkeit von Verschlußvorrichtungen gemäß dem Stand der Technik gegen Längsversatz ist die Figur 9 angefügt, die zeigt, daß bei (zum zweiten und dritten Bild hin) fortschreitendem Längsversetzen der Antriebsscheibe A die Ungleichheit der Ausgreiflänge der Kraftvermittler K zunimmt: Der in der Zeichnung linke Kraftvermittler K greift bis zur äußersten Linie L1 aus, die weiter außen liegt als die äußerste Linie L2, bis zu der der rechte Kraftvermittler K greift. Daß beide Linien L1, L2 weiter außen liegen als die ursprünglich weiteste Ausgreiflinie L3, kann hingegen durch eine Längenanpassung der Kraftvermittler leicht korrigiert werden.

Mit der Erfindung ist das Problem der gezeigten Unsymmetrie beseitigt, beide Kraftvermittler 7 greifen in beiden Ausführungsbeispielen stets symmetrisch und gleichweit in Fahrzeugquerrichtung q.

## Patentansprüche

1. Cabriolet-Fahrzeug (1) mit einem beweglichen, in seiner geschlossenen Stellung an einem Windschutzscheibenrahmen (5) halterbaren Dach (3), wobei für diese Halterung zumindest zwei bewegliche Eingriffsorgane (6) und zumindest ein Betätigungsorgan (8) für diese vorgesehen sind, das zur Übertragung einer Betätigungskraft über jeweils mit einer Komponente in Fahrzeugquerrichtung (q) ausgreifende Kraftvermittler (7) mit den Eingriffsorganen (6) in Wirkverbindung steht,
**dadurch gekennzeichnet,**
**daß** zumindest einer vertikalen Längsmittelebene (E) des Fahrzeugs (1) zugewandte Enden (7a) der Kraftvermittler (7) über quer ausgreifende Kulissen (13;113,114) geführt sind und das Betätigungsorgan (8) über zwei parallel zur Ebene der Erstreckung des vorderen Dachendes (4) liegende und einem Kurvenverlauf folgende Hebel (12) auf in den Kulissen (13;113,114) geführte Kulissensteine (14) für die Kraftvermittler (7) einwirkt, wobei die Enden (7a) der Kraftvermittler (7) gegenüber den Kulissensteinen (14) beweglich sind oder die an den Kulissensteinen (14) geführten Enden (7a) der Kraftvermittler (7) dort starr gehalten sind und die Kraftvermittler (7) in sich eine Beweglichkeit aufweisen.

2. Cabriolet-Fahrzeug (1) nach Anspruch 1,
**dadurch gekennzeichnet,**
**daß** mittels des Betätigungsorgans (8) ein um eine Fahrzeughochachse (9) drehbarer Rotationskörper (11) drehbeweglich ist, dessen Drehbewegung über die Kulissenführungen (13;113,114) in eine Translationsbewegung der Enden (7a) der Kraftvermittler (7) umsetzbar ist.

3. Cabriolet-Fahrzeug (1) nach einem der Ansprüche 1 oder 2,
**dadurch gekennzeichnet,**
**daß** ein Ende (7a) der Kraftvermittler (7) gegenüber den Kulissensteinen (14) in der Erstreckungsebene des vorderen Dachendes (4) beweglich ist.

4. Cabriolet-Fahrzeug (1) nach einem der Ansprüche 1 bis 3,
**dadurch gekennzeichnet,**
**daß** ein Ende (7a) der Kraftvermittler (7) gegenüber den Kulissensteinen (14) in einer vertikalen Ebene (19) beweglich ist.

5. Cabriolet-Fahrzeug (1) nach einem der Ansprüche 1 bis 4,
**dadurch gekennzeichnet,**
**daß** der Kulissenstein (14) einen Zapfen umfaßt, der von einem Lagerauge (16) am einwärts weisenden Ende (7a) des Kraftvermittlers (7) umgriffen ist.

6. Cabriolet-Fahrzeug (1) nach einem der Ansprüche 1 bis 5,
**dadurch gekennzeichnet,**
**daß** die Kraftvermittler (7) als Zug-Schub-Stangen ausgebildet sind.

7. Cabriolet-Fahrzeug (1) nach einem der Ansprüche 1 bis 6,
**dadurch gekennzeichnet,**
**daß** zu jeder Fahrzeugquerseite zwei zueinander parallele Kulissen (113;114) vorgesehen sind, deren Kulissensteine (14) miteinander verbunden (116) sind, wobei die Kraftvermittler (7) von diesen Verbindungen (116) ausgehen.

## Claims

1. A convertible vehicle (1) with a movable roof (3), which can be supported on a windscreen frame (5) in its closed position, there being provided, for said support, at least two movable engagement members (6) and at least one actuating member (8) for the latter, which is in operative connection with the engagement members (6) for the transmission of an actuating force via force transmitters (7) respectively extending outwardly with a component in the transverse vehicle direction (q),
**characterised in that** at least ends (7a) of the force transmitters facing a vertical median longitudinal plane (E) of the vehicle (1) are guided in slots (13;113,114) extending transversely outwardly and that the actuating member (8) acts on sliding blocks (14) for the force transmitters (7) via two levers (12) located parallel to the plane in which the front roof end (4) extends and following a curved path, said sliding blocks (14) being guided in the slots (13;113,114), and the ends (7a) of the force transmitters (7) being movable with respect to the sliding blocks (14) or the ends (7a) of the force transmitters (7) guided on the sliding blocks (14) being rigidly held there and the force transmitters (7) having intrinsic mobility.

2. The convertible vehicle (1) according to claim 1, **characterised in that** a rotation body (11), rotatable about a vertical vehicle axis (9), can be rotated by means of the actuating element (8), the rotational movement of the rotation body (11) being convertible by the slots (13;113,144) into a translational movement of the ends (7a) of the force transmitters (7).

3. The convertible vehicle (1) according to any one of claims 1 or 2, **characterised in that** an end (7a) of the force transmitters (7) is movable with respect to the sliding blocks (14) in the plane in which the front roof end (4) extends.

4. The convertible vehicle (1) according to any one of claims 1 to 3, **characterised in that** an end (7a) of the force transmitters (7) is movable with respect to the sliding blocks (14) in a vertical plane (19).

5. The convertible vehicle (1) according to any one of claims 1 to 4, **characterised in that** the sliding block (14) comprises a pin around which a bearing eye (16) engages at the inward-pointing end (7a) of the force transmitter (7).

6. The convertible vehicle (1) according to any one of claims 1 to 5, **characterised in that** the force transmitters (7) are provided as pull-push bars.

7. The convertible vehicle (1) according to any one of claims 1 to 6, **characterised in that** two parallel slots (113;114) are provided for each transverse vehicle side, whose sliding blocks (14) are connected to each other (116), and the force transmitters (7) start from these connections (116).

## Revendications

1. Véhicule cabriolet (1) avec un toit déplaçable (3) qui, dans sa position fermée, peut prendre appui sur un cadre de pare-brise (5), ledit appui étant réalisé au moyen d'au moins deux organes d'engrènement (6) déplaçables et d'au moins un organe d'actionnement (8) pour ces derniers, ledit organe d'actionnement (8) étant en liaison active avec les organes d'engrènement (6) afin de transmettre une force d'actionnement au moyen de transmetteurs de force (7) s'étendant vers l'extérieur respectivement avec une composante en direction transversale (q) du véhicule,
**caractérisé en ce qu'**au moins des extrémités (7a) des transmetteurs de force tournées vers un plan longitudinal médian vertical (E) du véhicule (1) sont guidées par des coulisses (13;113,114) s'étendant transversalement vers l'extérieur et **en ce que** l'organe d'actionnement (8) agit sur des coulisseaux (14) pour les transmetteurs de force (7) au moyen de deux leviers (12) disposés parallèlement par rapport au plan d'extension de l'extrémité avant (4) du toit et suivant une courbure, lesdits coulisseaux (14) étant guidés dans les coulisses (13;113,114), les extrémités (7a) des transmetteurs de force (7) étant déplaçables par rapport aux coulisseaux (14), ou les extrémités (7a) des transmetteurs de force (7) guidées par les coulisseaux (14) y étant retenues de manière rigide tandis que les transmetteurs de force (7) présentent une mobilité inhérente.

2. Véhicule cabriolet (1) selon la revendication 1, **caractérisé en ce qu'**un solide de rotation (11), qui est rotatif autour d'un axe vertical (9) du véhicule, peut être tourné au moyen de l'organe d'actionnement (8), le mouvement rotatif du solide de rotation (11) pouvant être transformé par les coulisses (13;113,144) en un mouvement translatoire des extrémités (7a) des transmetteurs de force (7).

3. Véhicule cabriolet (1) selon l'une quelconque des revendications 1 ou 2, **caractérisé en ce qu'**une extrémité (7a) des transmetteurs de force (7) est déplaçable par rapport aux coulisseaux (14) dans le plan d'extension de l'extrémité avant (4) du toit.

4. Véhicule cabriolet (1) selon l'une quelconque des revendications 1 à 3, **caractérisé en ce qu'**une extrémité (7a) des transmetteurs de force (7) est déplaçable par rapport aux coulisseaux (14) dans un plan vertical (19).

5. Véhicule cabriolet (1) selon l'une quelconque des revendications 1 à 4, **caractérisé en ce que** le coulisseau (14) comprend un ergot autour duquel un oeillet de palier (16), disposé à l'extrémité (7a) du transmetteur de force (7) tournée vers l'intérieur, vient en prise.

6. Véhicule cabriolet (1) selon l'une quelconque des revendications 1 à 5, **caractérisé en ce que** les transmetteurs de force (7) sont réalisés sous forme de barres de traction et de poussée.

7. Véhicule cabriolet (1) selon !'une quelconque des revendications 1 à 6, **caractérisé en ce que** l'on prévoit pour chaque côté transversal du véhicule deux coulisses parallèles (113;114) dont les coulisseaux (14) sont reliés entre eux (116), les transmetteurs de force (7) partant de ces liaisons (116).
